(19) Europäisches Patentamt
European Patent Office
Office européen des brevets

(11) Publication number: 0 204 083 B1

(12) **EUROPEAN PATENT SPECIFICATION**

(45) Date of publication of the patent specification: **19.12.90**

(51) Int. Cl.[5]: **C08F 218/00,** G02B 1/04

(21) Application number: **86103335.5**

(22) Date of filing: **12.03.86**

(54) **Process for the production of thermoformed articles.**

(30) Priority: **29.03.85 IT 2015685**

(43) Date of publication of application:
**10.12.86 Bulletin 86/50**

(45) Publication of the grant of the patent:
**19.12.90 Bulletin 90/51**

(84) Designated Contracting States:
**AT BE CH DE FR GB LI LU NL SE**

(56) References cited:
**EP-A- 0 114 080**
**US-A- 3 872 042**
**US-A- 4 373 076**

**The file contains technical information submitted after the application was filed and not included in this specification**

(73) Proprietor: **ENICHEM SYNTHESIS S.p.A., Via Ruggero Settimo 55, I-90139 Palermo(IT)**

(72) Inventor: **Renzi, Fiorenzo, Via Marco D'Agrate, 19/A, Milano(IT)**
Inventor: **Rivetti, Franco, Via Capitano Giuseppe Sella 41, Schio (VI)(IT)**
Inventor: **Romano, Ugo, Via XXV Aprile 10, Vimercate (MI)(IT)**

(74) Representative: **Roggero, Sergio et al, Ing. Barzanò & Zanardo Milano S.p.A. Via Borgonuovo 10, I-20121 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 204 083 B1

## Description

The present invention relates to the production of thermoformed optical articles, to the process of producing a polymerizable liquid composition for that purpose, and to the polymerizable liquid composition so produced.

Optical articles are known, as produced with polymerizates of glycol bis(allylcarbonates), such as disclosed in EP-A 0 035 304 and, particularly, those produced with polymerizates of diethylene glycol bis(allylcarbonate), due to their satisfactory optical and mechanical properties.

Generally, the optical articles in question are produced from the polymerizates referred to above by casting a liquid composition supplemented by polymerization initiators.

However, casting optical articles into glass moulds may prove disadvantageous and the preference is, at present, for the thermoforming technique, which consists of preparing a planar plate of the polymerizate concerned and heating same to a temperature above the glass-transition temperature of the polymerizate concerned, whereafter the plate is moulded into shape by pressure or vacuum: this method lends itself well to producing lenses, curved screens, visors and similar articles.

Generally, polymerizates of diethylene glycol bis(allylcarbonate) lend themselves poorly to thermoforming techniques, due to their considerable degree of cross-linking.

Therefore, it has been proposed to copolymerize diethylene glycol bis(allylcarbonate) together with one or more monofunctional monomers having good plasticity characteristics.

An approach in that direction is represented by EP-A 0 114 080 which discloses a polymerizable liquid composition consisting of a bis(allylcarbonate) of a dihydric alcohol oligomer, a bis(allylcarbonate) monomer of a dihydric or a trihydric alcohol, or an allyl ester, or a triallyl cyanurate or isocyanurate, and an acrylic or a vinylic monomer, the composition being polymerized in bulk with the aid of at least one radicalic initiator.

It has been observed, however, that some optical articles so obtained by thermoforming should be stored at room temperature, or nearly so, to avoid deformations due to loss of their curvature. In order to offset the shortcomings of the compositions for thermoforming provided by the prior art, the present invention provides a process for preparing thermoformed optical articles by polymerizing, in the form of a planar plate, a polymerizable liquid composition, and thermoforming said planar polymerizate plate in the form of the desired optical article, characterized in that said polymerizable liquid composition is composed of:

(A) from 30% to 80% by weight of the reaction product of diallylcarbonate and diethylene glycol, in a molar ratio of the former to the latter equal to, or greater than, 6:1, said reaction product consisting for at least 70% ot its weight of diethylene glycol bis(allyl carbonate), the balance consisting of diethylene glycol bis(allylcarbonate) oligomers;
(B) from 10% to 40% by weight of tris-hydroxyethylisocyanurate tris(allylcarbonate);
(C) from 10% to 40% by weight of vinyl acetate or methyl methacrylate,

said polymerizable liquid composition additionally containing from 1% to 5% by weight, relative to the sum of the weights of the components (A), (B) and (C), of at least one free-radical polymerization initiator.

The component (A) of the polymerizable liquid composition can be defined by the formula:

$$R\left[-O-\underset{\overset{\|}{O}}{C}-O-CH_2-CH=CH_2\right]_2 \qquad (I)$$

wherein R is the radical of diethylene glycol. This component can be prepared by reaction between diallylcarbonate and diethylene glycol, in a molar ratio to each other equal to or greater than 6/1, and preferably of the order of 12/1, operating in the presence of a basic catalyst, e.g., according to what is disclosed in European Patent Application Publn. Nº 35 304.

Under these conditions, a reaction product is obtained which is constituted by at least about 70% by weight by compound (I), the residual percentage being constituted by oligomer diethylene glycol bis(allylcarbonates). Thus, the component (A) of the polymerizable liquid composition can be constituted by the compound (I) only, or by a mixture containing at least about 70% by weight of compound (I), the residual percentage being constituted by oligomers thereof.

In the preferred form of practical embodiment, the component (A) is present in the polymerizable liquid composition in amounts of from 45 to 65% by weight.

The component (B) of the polymerizable liquid composition can be defined by the general formula:

$$R^{I}\left[-O-\overset{O}{\overset{\|}{C}}-O-CH_2-CH=CH_2\right]_3 \qquad (II)$$

wherein $R^I$ is the radical of tris-hydroxyethylisocyanurate.

This component can be prepared by means of the reaction between diallylcarbonate and tris-hydroxyethylisocyanurate, in a molar ratio to each other equal to or higher than about 6/1 and preferably of the order of 12/1, in the presence of basic catalysts, similarly to the foregoing component (A).

Under these conditions a reaction product is obtained, which is constituted by about 60% by compound (II), the residual percentage being constituted by oligomer tris-hydroxyethylisocyanurate tris(allylcarbonates). Thus, the component (B) of the polymerizable liquid composition can be constituted by the compound (II) alone, or by a mixture containing at least about 60% by weight of the compound (II), the residual percentage being constituted by oligomers thereof.

In the preferred form of practical embodiment, the component (B) is present in the polymerizable liquid composition in an amount comprised within the range of from 10 to 25% by weight.

The component (C) of the polymerizable liquid composition is constituted by vinyl acetate and/or methyl methacrylate which, in the preferred practical embodiment, are present in amounts of from 15 to 30% by weight.

The polymerizable liquid composition according to the present invention contains moreover one of more polymerization initiators, soluble in the same composition, and able to generate free radicals within a temperature range of from about 30 to about 120°C. Non-limitative examples of said initiators are diisopropylperoxydicarbonate, dicyclohexylperoxydicarbonate, di-sec.butylperoxydicarbonate, dibenzoylperoxide and tert.butylperbenzoate. In the preferred form of practical embodiment, the polymerization initiator is present in amounts of from 2 to 4.5% by weight, relatively to the total of the weights of components (A), (B) and (C).

The polymerizable liquid composition of the present invention can additionally contain one or more conventional additives, such as stabilizers, mould-release agents, dyes, pigments, U.V. light and I.R. light absorbers or the like, however in an overall amount not higher than 1% by weight relatively to the total of the weights of components (A), (B) and (C).

The liquid composition of the present invention is converted into the related polymerizate by heating at a temperature comprised within the range of from 30 to 120°C. The corresponding polymerization times are of the order of 3-100 hours. The polymerizates are prepared directly as flat plates, with thickness generally ranging from 1 to 4 mm, operating inside suitable moulds.

These flat plates are finally submitted to thermoforming by heating at a temperature higher than the glass transition temperature, and generally comprised within the range of from 140 to 200°C and subsequent curvature in a mould, not heated, with the application of vacuum between the plate and the same mould.

In this way, thermoformed optical articles are obtained, such as lenses (for sunglasses or for goggles), protecting visors, visors for motorcyclist helmets and the like, provided with high thermal resistance. Moreover, said articles display a whole of optical and mechanica1 characteristics similar to those of the commercial articles formed by the polymerizates of diethylene glycol bis(allylcarbonate), but relatively to these latter show considerably improved characteristics of thermal resistance.

In particular, the polymerizates obtained from compositions containing components (A) and (B) only are not transformable, and those obtained from compositions containing components (B) and (C) only show a whole of optical and mechanical characteristics considerably lower than those of diethylene glycol bis(allylcarbonate) polymerizate.

By means of the liquid and polymerizable compositions of the present invention, polymerizates and related thermoformed optical articles are achieved, the whole of the characteristics of which results unexpectedly good in view of the characteristics achievable when single components of the composition, or couples of the same components are used.

In the following experimental Examples, the following components have been used for the polymerizable liquid composition:

(A) Diethylene glycol bis(allylcarbonate): product from the reaction between diallylcarbonate and diethylene glycol, in the molar ratio of 12/1 to each other, operating according to what disclosed in European Patent Application publ. N. 35304;
This reaction product contains 85-90% of diethylene glycol bis(allylcarbonate), the residual percentage being constituted by oligomers of the same.

(B) Tris-hydroxyethylisocyanurate tris(allylcarbonate):
product from the reaction between diallylcarbonate and tris-hydroxyethylisocyanurate in the molar ratio of 12/1 to each other, obtained by operating according to the general lines of said European patent application. This reaction product contains 70-80% of tris-hydroxyethylisocyanurate tris(allylcarbonate), the residual percentage being constituted by oligomers of the same;

(C) The components (A), (B) and (C) are mixed in the suitable ratios, the polymerization initiator is then added and the so-obtained liquid compositions are poured into moulds constituted by two flat plates, with dimensions 20x20 cm, provided with a gasket of plastified polyvinyl chloride of 3.2 mm in thickness. The polymerization is carried out in forced-air circulation oven, at the temperature of 48°C for 72 hours. At the end of this time period the plates are kept two hours at 110°C, to the purpose of destroying the possible unreacted catalyst and of eliminating inner stresses.

On so-obtained polymerizates, the following characteristics are determined:

a)Optical characteristics
- refractive index $n_D^{20}$, by Abbe refractometer (ASTM D-1003);
- Haze (%) and visible transmittance (%), measured by Gardner Hazegard XL-211 (ASTM D-1003);
- Yellow index (YI), defined as

$$YI = \frac{100}{Y} (1.277 X - 1.06 Z)$$

determined by means of Gardner XL-805 colorimeter (ASTM D-1925).

b)Physical and mechanical characteristics
- Density in g/ml, determined by specific-gravity balance at the temperature of 20°C (ASTM D-792);
- Rockwell (M) hardness, measured by Rockwell durometer (ASTM D-785);
- Abrasion resistance, Taber method (ASTM D-1004 modified), executed with a pair of VS-10F grinding wheels and under a load of 500 g on both wheels. The results are expressed as the ratio of the number of passages necessary to produce a Haze increase of 10% for the sample under test, to that for a reference sample (polymethylmethacrylate, PMMA);
- Notch-free IZOD impact resistance (ASTM D-256 modified).

c)Thermal characteristics
- Distorsion temperature under load (HDT) (°C/1.82 MPa), (ASTM D-648).

The thermoforming is carried out on flat specimens of 75x65 mm, of 1.4 mm in thickness, prepared from the corresponding flat plates, obtained by polymerization of the liquid compositions under the previously described conditions.

The specimens are softened at 150°C for 2 minutes and are then bent on an aluminium mould, coated with a film of silicone rubber, with base curvature 6. This step of 2.5 minutes of duration is carried out at room temperature, by applying a vacuum between the specimen and the mould.

After this time period, the bent speciment (useful, e.g., as a neutral lens for sunglasses), now cold, is extracted from the mould, and its curvature is measured by means of a spherometer, obtaining constant values in the nearby of base 6.

The heat resistance of heat-bent specimens is evaluated by determining the decrease of their curvature after heat treatment of 1 hour at 60°C and of 1 hour at 60°C + 1 hour at 70°C, in forced-circulation oven.

The following experimental Examples are illustrative and not limitative of the scope of the invention.

Example 1

A liquid composition (Composition I) formed by:

| | | |
|---|---|---|
| A) | Diethylene glycol bis(allylcarbonate) | 57% by weight |
| B) | Tris-hydroxyethylisocyanurate tris-(allylcarbonate) | 19% by weight |
| C) | Vinyl acetate | 20% by weight |
| | Dicyclohexylperoxydicarbonate | 4% by weight |

is prepared.

For comparison purposes, a liquid composition (Composition II) formed by:

| | | |
|---|---|---|
| A) | Diethylene glycol bis(allylcarbonate) | 76% by weight |
| C) | Vinyl acetate | 20% by weight |
| | Dicyclohexylperoxydicarbonate | 4% by weight |

is prepared.

The compositions I and II are submitted to polymerization, operating at the temperature of 48°C, over a time of 72 hours. The polymerizate obtained from composition I shows optical and mechanical characteristics similar to those of the polymer obtained from composition II, but has a HDT value higher by about 15°C.

Such characteristics of polymerizates are reported in Table 1.

With such polymerizates , neutral lenses heat-bent to base 6 have been prepared, on which the heat resistance is evaluated, by determining their capability to maintain the initial curvature, submitting them to the previously described heat treatments.

The results, reported in Table 2, demonstrate that the heat-bent lenses obtained by starting from the polymerizate of composition I display a heat resistance considerably higher then the heat-bent lenses obtained starting from the polymerizate of composition II.

Example 2

The liquid compositions III and IV having the following composition, expressed as % by weight are prepared:

| COMPOSITION | III | IV |
|---|---|---|
| A) Diethylene glycol bis(allyl-carbonate) | 64.6% | 53.2% |
| B) Tris-hydroxyethylisocyanurate tris(allylcarbonate) | 11.4% | 22.8% |
| C) Vinyl acetate | 20.0% | 20.0% |
| Dicyclohexylperoxydicarbonate | 4.0% | 4.0% |

The compositions III and IV are submitted to polymerization, operating as described in Example 1, and the characteristics of the polymerizates are shown in Table 3.

With said polymerizates, lenses heat-bent to base 6 are prepared, on which the heat resistance is determined by determining their capability to maintain the initial curvature, submitting them to the heat treatments as previously described. The results are reported in Table 4.

Example 3

Four compositions (from V to VIII) are prepared, respectively containing 15%, 20%, 25% and 30% by weight of vinyl acetate, and 4% by weight of dicyclohexylperoxydicarbonate, the residual percentage being constituted by diethylene glycol bis(allylcarbonate) and by tris-hydroxyethylisocyanurate tris(allylcarbonate) in weight ratio to each other kept constant and equal to 75/25.

In a similar way, further four compositions (from IX to XII) are prepared, respectively containing 15%, 20%, 25% and 30% by weight of vinyl acetate and 4% by weight of dicyclohexylperoxydicarbonate, the residual percentage being constituted by diethylene glycol bis(allylcarbonate) and by tris-hydroxyethylisocyanurate tris(allylcarbonate) in weight ratio to each other kept constant and equal to 70/30.

The compositions from V to XII are submitted to polymerization, by operating as described in Example 1.

With said polymerizates, neutral lenses heat-bent to base 6 are prepared, on which the heat resistance is evaluated, by determining their capability to maintain the initial curvature, submitting them to the heat treatments as previously described. The results are reported in Table 5.

In these Examples, the compositions VI and X are respectively equal to compositions I and IV, but they are reported in the present Example, to the purpose of showing more clearly the influence of the concentration of vinyl acetate on the characteristics of eventually obtained articles.

Table 1

| Composition | I | II |
|---|---|---|
| Density (g/ml) | 1.3030 | 1.2857 |
| $n_D^{20}$ | 1.4975 | 1.4935 |
| YI | 1.6 | 0.70 |
| Haze (%) | 0.20 | 0.12 |
| Visible transmittance (%) | 93.1 | 93.4 |
| Rockwell hardness (M) | 102 | 94 |
| Modified Izod impact resistance ($kJ/m^2$) | 12.7 | 13.5 |
| Taber abrasion resistance (xPMMA) | 15 | 12 |
| HDT (°C) | 76.8 | 62.4 |

Example 4

Three compositions (from XIII to XV) are prepared, respectively containing 15%, 20% and 25% by weight of methyl methacrylate, and 3% by weight of dicyclohexylperoxydicarbonate, the residual percentage being constituted by diethylene glycol bis(allylcarbonate) and by tris-hydroxyethylisocyanurate tris-(allylcarbonate) in weight ratio to each other kept constant and equal to 75/25.

Said compositions are submitted to polymerization, by operating as described in Example 1.

With said polymerizates, neutral lenses heat-bent to base 6 are prepared, on which the heat resistance is evaluated, by determining their capability to maintain the initial curvature, submitting them to the heat treatments as previously described. The results are reported in Table 6.

Table 2

| Composition | I | II |
|---|---|---|
| Initial curvature (base) | 6 | 6 |
| Curvature after 1 hour at 60°C | 5.5 | 4.25 |
| Curvature after 1 hour at 60°C + 1 hour at 70°C | 4.75 | 1.0 |

Table 3

| Composition | III | IV |
|---|---|---|
| Density (g/ml) | 1.2977 | 1.3054 |
| $n_D^{20}$ | 1.4959 | 1.4983 |
| YI | 1.39 | 2.07 |
| Haze (%) | 0.43 | 0.23 |
| Visible transmittance (%) | 93.0 | 92.9 |
| Rockwell hardness (M) | 99 | 103 |
| Modified Izod impact resistance ($kI/m^2$) | 11.9 | 10.4 |
| Taber abrasion resistance (xPMMA) | 15 | 18 |
| HDT (°C) | 71.9 | 79.9 |

Table 4

| Composition | III | IV |
|---|---|---|
| Initial curvature (base) | 6 | 6 |
| Curvature after 1 hour at 60°C | 5.25 | 5.5-5.75 |
| Curvature after 1 hour at 60°C + 1 hour at 70°C | 4.25 | 5-5.25 |

Table 5

| Composition | Initial Curvature (base) | Curvature after 1 hour at 60°C | Curvature after 1 hour at 60°C + 1 hour at 70°C |
|---|---|---|---|
| V | 6 | 5.5-5.75 | 5 |
| VI | 6 | 5.5 | 4.75 |
| VII | 6 | 5.5 | 4.5-4.75 |
| VIII | 6 | 5.25-5.5 | 3.75-4 |
| IX | 6 | 5.5-5.75 | 5-5.25 |
| X | 6 | 5.5-5.75 | 5-5.25 |
| XI | 6 | 5.5-5.75 | 4.75-5 |
| XII | 6 | 5.5 | 4.5 |

Table 6

| Composition | XIII | XIV | XV |
|---|---|---|---|
| Initial curvature (base) | 6 | 6 | 6 |
| Curvature after 1 hour at 60°C | 5.5 | 5.5-5.75 | 5.5-5.75 |
| Curvature after 1 hour at 60°C + 1 hour at 70°C | 4.75 | 5 | 5 |

## Claims

1. A process for preparing thermoformed optical articles by polymerizing, in the form of a planar plate, a polymerizable liquid composition, and thermoforming said planar polymerizate plate in the form of the desired optical article, characterized in that said polymerizable liquid composition is composed of:

(A) from 30% to 80% by weight of the reaction product of diallylcarbonate and diethylene glycol, in a molar ratio of the former to the latter equal to, or greater than, 6:1, said reaction product consisting for at least 70% of its weight of diethylene glycol bis(allyl carbonate), the balance consisting of diethylene glycol bis(allylcarbonate) oligomers;

(B) from 10% to 40% by weight of tris-hydroxyethylisocyanurate tris(allylcarbonate);

(C) from 10% to 40% by weight of vinyl acetate or methyl methacrylate, said polymerizable liquid composition additionally containing from 1% to 5% by weight, relative to the sum of the weights of the components (A), (B) and (C), of at least one free-radical polymerization initiator.

2. Process according to claim 1, wherein the component (B) is the reaction product of diallylcarbonate with tris-hydroxyethylisocyanurate in a molar ratio of the former to the latter equal to, or greater than 6:1, and consists for at least 60% of its weight of tris-hydroxyethylisocyanurate tris(allylcarbonate), the balance consisting of tris-hydroxyethylisocyanurate tris(allylcarbonate) oligomers.

3. Process according to claim 1, wherein the free-radical polymerization initiator is selected from diisopropylperoxydicarbonate, dicyclohexylperoxydicarbonate, disec.butylperoxydicarbonate, dibenzoyl peroxide, and tert.butyl perbenzoate.

4. Process according to claim 1, wherein said polymerizable liquid composition is composed of from 45% to 65% by weight of component (A), from 10% to 25% by weight of component (B), and from 15% to 30% by weight of component (C) and further contains from 2% to 4, 5% by weight, relative to the sum of the weights of the components (A), (B) and (C), of a free-radical polymerization initiator.

5. Process according to claim 1, wherein said polymerizable liquid composition further contains not more than 1% by weight, relative to the total of the weights of the components (A), (B) and (C), of one compound selected from stabilizers, mould-release agents, dyestuffs, pigments, UV-absorbers and IR-absorbers.

6. Process according to claim 1, wherein said polymerizable liquid composition is polymerized at a temperature of from 30°C to 120°C and for a time of from 3h to 100h, into plates having a thickness of from 1 mm to 4 mm, said plates being subsequently heated to a temperature of from 140°C to 200°C and thermoformed inside non-heated moulds.

7. A polymerizable liquid composition for producing thermoformed articles, composed of:

(A) from 30% to 80% by weight of the reaction product of diallylcarbonate and diethylene glycol, in a molar ratio of the former to the latter equal to, or greater than, 6:1, said reaction product consisting for at least 70% of its weight of diethylene glycol bis(allylcarbonate), the balance consisting of diethylene glycol bis(allylcarbonate) oligomers;

(B) from 10% to 40% by weight of tris-hydroxyethylisocyanurate tris(allylcarbonate):

(C) from 10% to 40% by weight of vinyl acetate or methyl methacrylate,

said polymerizable liquid composition additionally containing from 1% to 5% by weight, relative to the sum of the weights of the components (A), (B) and (C), of at least one free-radical polymerization initiator.

## Patentansprüche

1. Verfahren zur Herstellung von warmverformten optischen Gegenständen durch Polymerisieren einer polymerisierbaren flüssigen Zusammensetzung in Form einer ebenen Platte und Warmverformen dieser ebenen Polymerisatplatte zu der Form des gewünschten optischen Gegenstandes, dadurch gekennzeichnet, daß die polymerisierbare flüssige Zusammensetzung aus:

(A) 30 bis 80 Gew.-% Reaktionsprodukt von Diallylcarbonat und Diethylenglykol in einem Molverhältnis der erstgenannten Verbindung zur letztgenannten Verbindung von gleich oder größer als 6:1, wobei dieses Reaktionsprodukt zu wenigstens 70% seines Gewichtes aus Diethylenglykol-bis(allylcarbonat) besteht, während der Rest aus Diethylenglykol-bis(allylcarbonat)-Oligomeren besteht;

(B) 10 bis 40 Gew.-% tris-Hydroxyethylisocyanurat-tris(allylcarbonat);

(C) 10 bis 40 Gew.-% Vinylacetat oder Methylmethacrylat besteht, wobei die polymerisierbare flüssige Zusammensetzung zusätzlich 1 bis 5 Gew.-%, bezogen auf die Summe der Gewichte der Komponenten (A), (B) und (C), wenigstens eines freiradikalischen Polymerisationsinitiators enthält.

2. Verfahren nach Anspruch 1, worin die Komponente (B) das Reaktionsprodukt von Diallylcarbonat mit tris-Hydroxyethylisocyanurat in einem Molverhältnis der erstgenannten Verbindung zur letztgenannten Verbindung von gleich oder größer als 6:1 ist und zu wenigstens 60% ihres Gewichtes aus tris-Hydroxyethylisocyanurat-tris(allylcarbonat) besteht, während der Rest aus tris-Hydroxyethylisocyanurat-tris(allylcarbonat)-Oligomeren besteht.

3. Verfahren nach Anspruch 1, worin der freiradikalische Polymerisationsinitiator unter Diisopropylperoxydicarbonat, Dicyclohexylperoxydicarbonat, Di-sek.butylperoxydicarbonat, Dibenzoylperoxid und tert.-Butylperbenzoat ausgewählt wird.

4. Verfahren nach Anspruch 1, worin die polymerisierbare flüssige Zusammensetzung aus 45 bis 65 Gew.-% Komponente (A), 10 bis 25 Gew.-% Komponente (B) und 15 bis 30 Gew.-% Komponente (C) zusammengesetzt ist und weiterhin 2 bis 4,5 Gew.-%, bezogen auf die Summe der Gewichte der Komponenten (A), (B) und (C), eines freiradikalischen Polymerisationsinitiators enthält.

5. Verfahren nach Anspruch 1, worin die polymerisierbare flüssige Zusammensetzung weiterhin nicht mehr als 1 Gew.-%, bezogen auf die Summe der Gewichte der Komponenten (A), (B) und (C), einer Verbindung, ausgewählt unter Stabilisatoren, Formtrennmitteln, Farbstoffen, Pigmenten, UV-Absorbern und IR-Absorbern, enthält.

6. Verfahren nach Anspruch 1, worin die polymerisierbare flüssige Zusammensetzung bei einer Temperatur von 30°C bis 120°C und während einer Dauer von 3 Stunden bis 100 Stunden zu Platten mit einer Stärke von 1 mm bis 4 mm polymerisiert wird, welche Platten anschließend auf eine Temperatur von 140°C bis 200°C erhitzt und innerhalb ungeheizter Formen warm verformt werden.

7. Polymerisierbare flüssige Zusammensetzung zur Herstellung warmverformter Gegenstände, bestehend aus:

(A) 30 bis 80 Gew.-% Reaktionsprodukt von Diallylcarbonat und Diethylenglykol in einem Molverhältnis der erstgenannten Verbindung zur letztgenannten Verbindung von gleich oder größer als 6:1, welches Reaktionsprodukt zu wenigstens 70% seines Gewichtes aus Diethylenglykol-bis(allylcarbonat) besteht, während der Rest aus Diethylenglykol-bis(allylcarbonat)-Oligomeren besteht;

(B) 10 bis 40 Gew.-% tris-Hydroxyethylisocyanurat-tris(allylcarbonat);

(C) 10 bis 40 Gew.-% Vinylacetat oder Methylmethacrylat,

wobei die polymerisierbare flüssige Zusammensetzung zusätzlich 1 bis 5 Gew.-%, bezogen auf die Summe der Gewichte der Komponenten (A), (B) und (C), wenigstens eines freiradikalischen Polymerisationsinitiators enthält.

## Revendications

1. Procédé de préparation d'articles optiques thermoformés, par polymérisation, sous forme d'une plaque plane, d'une composition liquide polymérisable, et thermoformage de ladite plaque plane de produit de polymérisation dans la forme de l'article optique désiré, caractérisé en ce que ladite composition liquide polymérisable est composée de:
(A) 30 à 80% en poids du produit de réaction du carbonate de diallyle et du diéthylène-glycol, en un rapport molaire du premier au dernier supérieur ou égal à 6:1, ledit produit de réaction étant constitué, pour au moins 70% de son poids, de bis-(allyl-carbonate) de diéthylène-glycol, le reste consistant en oligomères de bis(allylcarbonate) de diéthylène-glycol;
(B) 10 à 40% en poids de tris(allyl-carbonate) de tris-hydroxyéthyl-isocyanurate;
(C) 10 à 40% en poids d'acétate de vinyle ou de méthacrylate de méthyle,
ladite composition liquide polymérisable contenant en outre de 1 à 5% en poids, par rapport à la somme des poids des composants (A), (B) et (C), d'au moins un amorceur de polymérisation radicalaire.

2. Procédé conforme à la revendication 1, dans lequel le composant (B) est le produit de réaction du carbonate de diallyle avec le tris-hydroxyéthyl-isocyanurate, en un rapport molaire du premier au dernier supérieur ou égal à 6:1, et est constitué, pour au moins 60% de son poids, de tris(allyl-carbonate) de tris-hydroxyéthyl-isocyanurate, le reste consistant en oligomères de tris(allyl-carbonate) de tris-hydroxyéthyl-isocyanurate.

3. Procédé conforme à la revendication 1, dans lequel l'amorceur de polymérisation radicalaire est choisi parmi le diisopropylperoxydicarbonate, le dicyclohexylperoxydicarbonate, le di-s-butylperoxydicarbonate, le dibenzoylperoxyde et le perbenzoate de tertiobutyle.

4. Procédé conforme à la revendication 1, dans lequel ladite composition liquide polymérisable est composée de 45 à 65% en poids de composant (A), de 10 à 25% en poids de composant (B), et de 15 à 30% en poids de composant (C) et contient en outre de 2 à 4,5% en poids, par rapport à la somme des poids des composants (A), (B) et (C), d'un amorceur de polymérisation radicalaire.

5. Procédé conforme à la revendication 1, dans lequel ladite composition liquide polymérisable contient en outre au plus 1% en poids, par rapport au total des poids des composants (A), (B) et (C), d'un composé choisi parmi les stabilisants, les agents de démoulage, les matières colorantes, les pigments, les absorbeurs d'UV et les absorbeurs d'IR.

6. Procédé conforme à la revendication 1, dans lequel ladite composition liquide polymérisable est polymérisée à une température de 30 à 120°C et pendant une durée de 3 h à 100 h, en plaques ayant une épaisseur de 1 mm à 4 mm, lesdites plaques étant ensuite chauffées à une température de 140 à 200°C et thermoformées dans des moules non chauffés.

7. Composition liquide polymérisable pour la production d'articles thermoformés, composée de:
(A) 30 à 80% en poids du produit de réaction du carbonate de diallyle et du diéthylène-glycol, en un rapport molaire du premier au dernier supérieur ou égal à 6:1, ledit produit de réaction étant constitué, pour au moins 70% de son poids, de bis-(allyl-carbonate) de diéthylène-glycol, le reste consistant en oligomères de bis(allylcarbonate) de diéthylène-glycol;
(B) 10 à 40% en poids de tris(allyl-carbonate) de tris-hydroxyéthyl-isocyanurate;
(C) 10 à 40% en poids d'acétate de vinyle ou de méthacrylate de méthyle,
ladite composition liquide polymérisable contenant en outre de 1 à 5% en poids, par rapport à la somme des poids des composants (A), (B) et (C), d'au moins un amorceur de polymérisation radicalaire.